Europäisches Patentamt

European Patent Office

Office européen des brevets

(19)

(11) EP 0 733 008 B1

(12) EUROPÄISCHE PATENTSCHRIFT

(45) Veröffentlichungstag und Bekanntmachung des Hinweises auf die Patenterteilung:
01.04.1998 Patentblatt 1998/14

(21) Anmeldenummer: 95902115.5

(22) Anmeldetag: 02.12.1994

(51) Int. Cl.$^6$: **B62D 6/00**
// B62D101:00, B62D113:00, B62D137:00, B62D151:00

(86) Internationale Anmeldenummer:
PCT/EP94/04010

(87) Internationale Veröffentlichungsnummer:
WO 95/15879 (15.06.1995 Gazette 1995/25)

(54) **FAHRZEUG MIT LENKBAREN VORDER- UND HINTERRÄDERN**

VEHICLE WITH FRONT AND REAR WHEEL STEERING

VEHICULE A ROUES AVANT ET ARRIERE BRAQUABLES

(84) Benannte Vertragsstaaten:
**DE FR GB IT**

(30) Priorität: **07.12.1993 DE 4341636**

(43) Veröffentlichungstag der Anmeldung:
**25.09.1996 Patentblatt 1996/39**

(73) Patentinhaber:
**ZF FRIEDRICHSHAFEN Aktiengesellschaft
88038 Friedrichshafen (DE)**

(72) Erfinder:
• **RIEF, Klaus
D-73527 Schwäbisch Gmünd (DE)**
• **KOGEL, Walter
D-73453 Abtsgmünd (DE)**
• **ELSER, Dieter
D-73457 Essingen (DE)**

(56) Entgegenhaltungen:
EP-A- 0 545 054          DE-A- 3 506 048
DE-A- 3 929 994

## Beschreibung

Die Erfindung betrifft ein Fahrzeug mit lenkbaren Vorder- und Hinterrädern nach dem Oberbegriff des Anspruches 1. Bei derartigen Fahrzeugen wird der Lenkwinkel der Hinterräder abhängig von dem Lenkwinkel der Vorderräder und von weiteren Parametern eingestellt.

Bei niedriger Fahrgeschwindigkeit bei Vorwärtsfahrt werden die Hinterräder gegensinnig zu den Vorderrädern eingeschlagen, um die Wendigkeit des Fahrzeugs zu erhöhen, indem der Durchmesser des Wendekreises des Fahrzeugs verringert wird. Bei Fahrzeugen mit langem Radstand, insbesondere bei Bussen, schwenkt das Fahrzeugheck stark aus. Beim Losfahren von einer Bushaltestelle können von den Hinterrädern die Bordsteine überrollt werden. Hindernisse können vom Fahrzeugheck erfaßt werden.

Aufgrund dieser Problematik wurde bei einem bekannten Fahrzeug (DE-C2-35 06 408) vorgeschlagen, daß der Hinterrad-Einschlagwinkel allmählich in Abhängigkeit von dem vom Fahrzeug zurückgelegten Weg an den durch den Lenkeinschlag der Vorderräder vorgegebenen Sollwert angepaßt wird.

Aus der DE-A-39 29 994 ist ein anderes Fahrzeug bekannt, bei dem die Verstellung der Hinterräder beim Anfahren und Herauslenken aus der Geradeausfahrt zeitlich verzögert der Lenkbewegung der Vorderräder folgt.

In diesem bekannten Fahrzeug ist die Verzögerung derart vorgesehen, daß die Änderung des Hinterrad-Lenkwinkels erst zu einem späteren Zeitpunkt als die Änderung des Vorderrad-Lenkwinkels beginnt.

Der Erfindung liegt die Aufgabe zugrunde, das Lenkverhalten eines bekannten Fahrzeugs weiter zu verbessern.

Diese Aufgabe wird durch das im Anspruch 1 gekennzeichnete Fahrzeug gelöst. Die Verstellung der Hinterräder beim Anfahren und Herauslenken aus der Geradeausfahrt beginnt sofort mit der Änderung des Vorderrad-Lenkwinkels, sie folgt aber entsprechend der Gleichung $T^*(d\beta/dt) + \beta = f(v, a)^* \alpha$ zeitlich verzögert im Sinne einer Verzögerung erster Ordnung der Lenkbewegung der Vorderräder. Dadurch wird sichergestellt, daß sich das Fahrzeugheck zunächst nahezu parallel zu einem Bordstein oder einem sonstigen Hindernis bewegt. Das kurvenäußere Hinterrad läuft innerhalb der Laufbahn des kurvenäußeren Vorderrades. Das kurvenäußere Hinterrad kann somit kein Hindernis überfahren, welches nicht bereits schon mit dem kurvenäußeren Vorderrad hätte kollidieren müssen.

Zweckmäßige und vorteilhafte Ausgestaltungen der Erfindung ergeben sich aus den Unteransprüchen.

Die zeitliche Verzögerung der Verstellung der Hinterräder gegenüber der Lenkbewegung der Vorderräder wird derart festgelegt, daß die Verzögerung bei kleinen Fahrgeschwindigkeiten größer ist als bei großen Fahrgeschwindigkeiten und oberhalb eines Grenzwertes von beispielsweise 20 km/h Null ist. Dies ergibt fahrdynamische Vorteile, wie beispielsweise einen sofortigen Seitenkraftaufbau bei Fahrgeschwindigkeiten oberhalb des Grenzwertes.

Bei einem für Rechtsverkehr vorgesehenen Fahrzeug genügt es, die zeitliche Verzögerung nur bei einem Lenkeinschlag in Richtung auf eine Linkskurve festzulegen. Bei einem Bus z. B. wird die Bushaltestelle immer nur von einer Seite angefahren, d. h. beim Herausfahren aus der Bushaltestelle kann nur auf dieser Seite der Bordstein bzw. ein Hindernis überfahren werden. Eine kleine Einbuße bei der Wendigkeit des Fahrzeugs in niedrigen Fahrgeschwindigkeiten kann bei Linkskurven akzeptiert werden, da Linkskurven immer auf der kurvenäußeren Fahrspur gefahren werden, d. h. auf der Fahrspur mit dem größeren Radius. Bei Fahrzeugen, die für Linksverkehr vorgesehen sind, wird dieses Merkmal seitenverkehrt ausgeführt.

Die Steuer- und Regeleinrichtung für die Lenkung der Hinterräder kann dadurch vereinfacht werden, daß die zeitliche Verzögerung nur bei Vorwärtsfahrt erfolgt, nicht aber bei Rückwärtsfahrt.

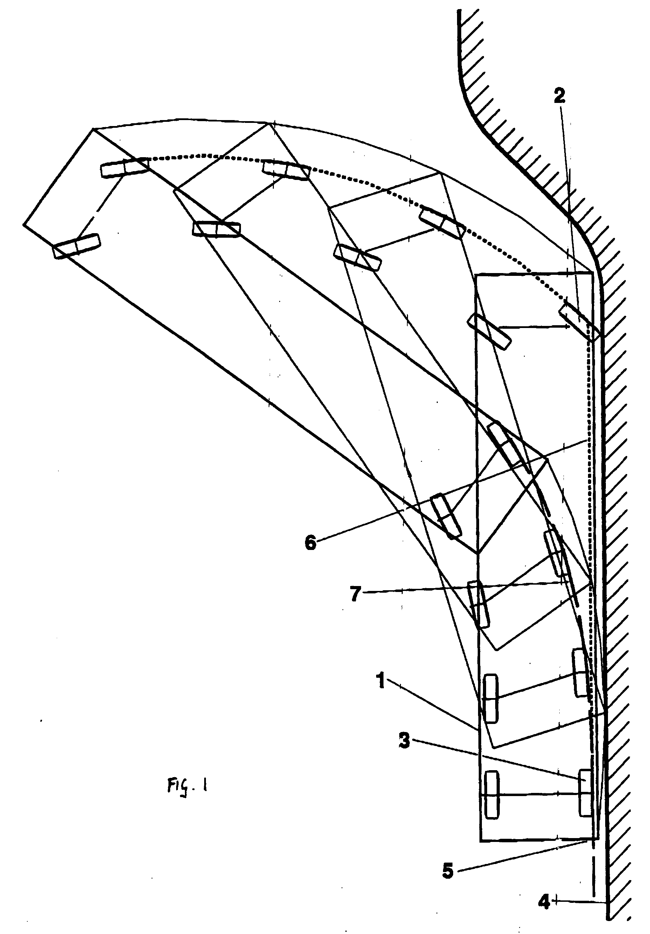

Im folgenden wird die Erfindung anhand eines in der Zeichnung dargestellten Ausführungsbeispiels näher erläutert:

Die einzige Figur zeigt einen Lenkvorgang des Fahrzeuges mit mehreren Positionen des Fahrzeugs.

Ein schematisch dargestelltes Fahrzeug 1 weist lenkbare Vorderräder 2 und lenkbare Hinterräder 3 auf. Das Fahrzeug ist in mehreren Positionen während eines Lenkvorgangs dargestellt. In der Ausgangsposition befindet sich das Fahrzeug parallel zu einer geradlinigen seitlichen Begrenzungslinie 4, beispielsweise einem Bordstein oder einer Mauer. In dieser Position sowie in der gezeigten Endstellung ist die Außenkontur des Fahrzeugs durch dick ausgezogene Linien dargestellt.

Beim Wegfahren von der Begrenzungslinie 4 werden zunächst die Vorderräder 2 alleine eingeschlagen. Die Hinterräder 3 werden bei einem Fahrzeug gemäß dem Stand der Technik, unter Berücksichtigung der Anfahrgeschwindigkeit, erst zeitlich verzögert, d. h. nach Ablauf eines bestimmten Zeitintervalls, eingeschlagen, und zwar entgegengesetzt zu den Vorderrädern 2. Dadurch bewegt sich ein kurvenäußerer Eckpunkt S des Fahrzeughecks nahezu parallel zu der Begrenzungslinie 4. Erst nach Ablauf des Zeitintervalls bewegt sich das Fahrzeugheck von der Begrenzungslinie 4 weg.

Bei allgemein bekannten Fahrzeugen mit gelenkten Vorder- und Hinterrädern folgt die Zuordnung des Radeinschlags $\alpha$ der Vorderräder zu dem Radeinschlag $\beta$ der Hinterräder in Abhängigkeit von der Fahrgeschwindigkeit v der Gleichung

$$\beta = f(v) \times \alpha$$

Bei dem erfindungsgemäßen Fahrzeug folgt die Zuordnung des Radeinschlags $\alpha$ der Vorderräder 2 zu dem Radeinschlag $\beta$ der Hinterräder 3 verzögert der Gleichung

$$T \frac{d\beta}{dt} + \beta = f(v, \alpha) \times \alpha$$

Hierbei ist $f(v,\alpha)$ die Kennfeldzuordnung in Abhängigkeit von der Fahrgeschwindigkeit v und dem Radeinschlag $\alpha$ der Vorderräder; T ist die Zeitkonstante. Die Zeitkonstante T wird je nach Fahrsituation und Fahrzustand in Abhängigkeit von verschiedenen Parametern gewählt, insbesondere von:

- Geschwindigkeit v,
- Einschlagrichtung der Vorderräder,
- Fahrtrichtung,
- Radstand des Fahrzeugs,
- Fahrzeuglänge und
- Verhältnis der maximalen Lenkeinschläge der Vorder- und Hinterräder.

Die Problematik des ausschwenkenden Heckteils des Fahrzeugs tritt vor allem beim Vorbeifahren an bzw. Wegfahren von Hindernissen, wie beispielsweise der genannten Begrenzungslinie 4, bei niedrigen Fahrgeschwindigkeiten auf. Es ist deshalb zweckmäßig, die zeitliche Verzögerung durch die Zeitkonstante T nur im Bereich kleiner Fahrgeschwindigkeiten in ihrer ganzen Größe vorzusehen. Die Zeitkonstante T wird mit zunehmender Fahrgeschwindigkeit verkleinert, bis sie schließlich ab einem bestimmten Grenzwert, beispielsweise ab 20 km/h, gleich Null ist.

Bei Fahrzeugen, die eine bestimmte Begrenzungslinie immer nur von einer Seite her anfahren, wie beispielsweise Busse an Bushaltestellen, muß auch nur auf dieser Seite die Problematik des ausschwenkenden Hecks berücksichtigt werden. Die zeitliche Verzögerung durch die Zeitkonstante T muß deshalb bei einem für Rechtsverkehr vorgesehenen Fahrzeug nur bei einem Lenkeinschlag in Richtung auf eine Linkskurve vorgesehen werden. Bei einem Lenkeinschlag in Richtung auf eine Rechtskurve kann die Zeitkonstante T Null sein. Bei Fahrzeugen, die für Linksverkehr vorgesehen sind, werden die Beziehungen umgekehrt gewählt.

Ähnlich liegen die Verhältnisse bei Vorwärts- bzw. Rückwärtsfahrt. Hier kann bei Rückwärtsfahrt die Zeitkonstante sehr klein bzw. sogar gleich Null gewählt werden. Dann wird ein ähnliches Fahrverhalten erzielt, wie bei herkömmlichen, allradgelenkten Fahrzeugen.

Die Problematik des ausschwenkenden Hecks ergibt sich nur beim Auslenken der Hinterräder 3, d. h. bei einem Herauslenken aus der Geradeausfahrtstellung. Diese Problematik tritt nicht auf beim Zurücklenken der Hinterräder 3 in die Geradeausfahrtstellung.

Hierbei nähert man sich immer dem sicheren Zustand der Neutrallage in der Geradeausfahrtstellung. Beim Zurücklenken kann deshalb die Zeitkonstante T Null sein.

Durch eine kurzgestrichelte Linie 6 ist die Fahrspur des kurvenäußeren Vorderrades 2 markiert. Die Fahrspur des kurvenäußeren Hinterrades 3 ist durch eine langgestrichelte Linie 7 markiert. Durch diese Markierung der beiden Linien 6 und 7 wird deutlich, daß die Laufbahn des kurvenäußeren Hinterrades 3 immer innerhalb der Laufbahn des kurvenäußeren Vorderrades 2 liegt.

Die Auswahl der Zeitkonstante T in Abhängigkeit der fahrzeugspezifischen Parameter, Fahrzeugradstand, Fahrzeuglänge, Verhältnis der maximalen Lenkeinschläge der Vorderund Hinterräder 2, 3, ermöglicht eine Anpassung an unterschiedliche Fahrzeugabmessungen.

Die zeitliche Verzögerung kann an das Eintreten bestimmter Ereignisse gekoppelt sein. So ist es beispielsweise bei einem Bus möglich, die zeitliche Verzögerung nur dann zu initiieren, wenn die Türen beim Einfahren in eine Bushaltestelle geöffnet werden. Dies ist ein Signal dafür, daß der Bus beim darauffolgenden Anfahren aus der Bushaltestelle herausfahren wird.

**Patentansprüche**

1.  Fahrzeug mit lenkbaren Vorderrädern (2) und lenkbaren Hinterrädern (3), wobei der Lenkwinkel $\beta$ der Hinterräder (3) abhängig von dem Lenkwinkel $\alpha$ der Vorderräder (2) und von weiteren Parametern eingestellt wird, wobei die Verstellung der Hinterräder (3) beim Anfahren und Herauslenken aus der Geradeausfahrt der Lenkbewegung der Vorderräder (2) zeitlich verzögert folgt, dadurch **gekennzeichnet,** daß die Verstellung der Hinterräder (3) beim Anfahren und Herauslenken aus der Geradeausfahrt der Lenkbewegung der Vorderräder (2) entsprechend der Gleichung $T^*(d\beta/dt) + \beta = f(v, \alpha)^* \alpha$ folgt, wobei T die Zeitkonstante und v die Fahrgeschwindigkeit ist.

2.  Fahrzeug nach Anspruch 1, dadurch **gekennzeichnet,** daß die zeitliche Verzögerung bei kleinen Fahrgeschwindigkeiten größer ist als bei großen Fahrgeschwindigkeiten.

3.  Fahrzeug nach Anspruch 2, dadurch **gekennzeichnet,** daß die zeitliche Verzögerung bei Fahrgeschwindigkeiten oberhalb eines bestimmten Grenzwertes, z. B. 20 km/h, Null ist.

4.  Fahrzeug nach einem der Ansprüche 1 bis 3, dadurch **gekennzeichnet,** daß die zeitliche Verzögerung bei einem für Rechtsverkehr vorgesehenen Fahrzeug (1) nur bei einem Lenkeinschlag in Richtung auf eine Linkskurve erfolgt und bei einem Lenkeinschlag in Richtung auf eine Rechtskurve Null ist.

5. Fahrzeug nach einem der Ansprüche 1 bis 4, dadurch **gekennzeichnet,** daß die zeitliche Verzögerung nur bei Vorwärtsfahrt erfolgt und bei Rückwärtsfahrt Null ist.

6. Fahrzeug nach einem der Ansprüche 1 bis 5, dadurch **gekennzeichnet,** daß die zeitliche Verzögerung abhängig von weiteren Parametern erfolgt, insbesondere von dem Fahrzeugradstand, der Fahrzeuglänge, dem Verhältnis der maximalen Lenkeinschläge der Vorder- und Hinterräder (2, 3).

7. Fahrzeug nach einem der Ansprüche 1 bis 6, dadurch **gekennzeichnet,** daß die zeitliche Verzögerung an das Eintreten bestimmter Ereignisse gekoppelt ist.

8. Fahrzeug nach Anspruch 7, dadurch **gekennzeichnet,** daß die zeitliche Verzögerung an eine Betätigung der Türen beim Einfahren in eine Bushaltestelle gekoppelt ist.

## Claims

1. Vehicle with steerable front wheels (2) and steerable back wheels (3), wherein the steering angle $\beta$ of the back wheels (3) is adjusted in dependence upon the steering angle $\alpha$ of the front wheels (2) and upon further parameters, wherein adjustment of the back wheels (3) upon moving off and steering out of a straight ahead direction follows the steering motion of the front wheels (2) after a time delay, characterized in that the adjustment of the back wheels (3) upon moving off and steering out of a straight ahead direction follows the steering motion of the front wheels (2) in accordance with the equation $T^{*}(d\beta/dt) + \beta = f(v, \alpha)^{*} \alpha$, in which T is the time constant and v is the driving speed.

2. Vehicle according to claim 1, characterized in that the time delay is greater at low driving speeds than at high driving speeds.

3. Vehicle according to claim 2, characterized in that the time delay at driving speeds above a specific limit value, e.g. 20 kph, is zero.

4. Vehicle according to one of claims 1 to 3, characterized in that the time delay in a vehicle (1) intended for driving on the right arises only in the case of a steering lock in the direction of a left-hand bend and is zero in the case of a steering lock in the direction of a right-hand bend.

5. Vehicle according to one of claims 1 to 4, characterized in that the time delay arises only when driving forward and is zero when reversing.

6. Vehicle according to one of claims 1 to 5, characterized in that the time delay arises in dependence upon further parameters, in particular upon the vehicle wheel base, the vehicle length, the ratio of the maximum steering locks of the front and back wheels (2, 3).

7. Vehicle according to one of claims 1 to 6, characterized in that the time delay is linked to the occurrence of specific events.

8. Vehicle according to claim 7, characterized in that the time delay is linked to operation of the doors upon pulling into a bus stop.

## Revendications

1. Véhicule avec roues avant (2) directrices et roues arrière (3) directrices, dans lequel l'angle de braquage $\beta$ des roues arrière (3) dépend de l'angle de braquage $\alpha$ des roues avant (2) ainsi que d'autres paramètres réglables, dans lequel le déplacement des roues arrière (3) lors du démarrage et la déviation angulaire des roues avant (2) par rapport à une trajectoire rectiligne s'effectuent de façon temporisée, **caractérisé en ce que** le déplacement des roues arrière (3) lors du démarrage et la déviation angulaire des roues avant (2) par rapport à la trajectoire rectiligne répond à la relation suivante $T^{*}(d\beta/dt) + \beta = f(v, \alpha)^{*}\alpha$, où T est la constante de temps et v la vitesse du véhicule.

2. Véhicule selon la revendication 1, **caractérisé en ce que** la temporisation est supérieure pour de faibles vitesses du véhicule que pour des grandes vitesses.

3. Véhicule selon la revendication 2, **caractérisé en ce que** la temporisation est nulle pour une vitesse supérieure à un seuil qui est par exemple de 20 km/h.

4. Véhicule selon l'une quelconque des revendications 1 à 3, **caractérisé en ce que** la temporisation ne devient effective que lors d'un virage à gauche pour un véhicule (1) destiné à la circulation à droite, et en ce qu'elle est nulle lors d'un virage à droite.

5. Véhicule selon les revendications 1 à 4, **caractérisé en ce que** la temporisation n'intervient qu'en marche avant et qu'elle est nulle en marche arrière.

6. Véhicule selon les revendications 1 à 5, **caractérisé en ce que** la temporisation dépend en outre d'autres paramètres notamment de la position rectiligne du véhicule, de sa longueur et du braquage maximal des roues avant et des roues arrière (2, 3).

7. Véhicule selon les revendications 1 à 6, **caractérisé en ce que** la temporisation dépend d'un certain événement.

8. Véhicule selon la revendication 7, **caractérisé en ce que** la temporisation est associée à l'articulation d'une porte lors de l'entrée dans un arrêt de bus.

FIG. 1